# EUROPEAN PATENT APPLICATION

(11) **EP 4 848 173 A1**
(43) Date of publication of application: **02.12.2026**
(21) Application number: 25472019.6
(22) Date of filing: 12.08.2025
(51) Int. Cl.: G06Q 10/0833, G06Q 10/087, G06Q 30/018, G06Q 50/02

(54) **METHOD FOR DIGITAL TRACEABILITY AND MANAGEMENT OF AGRICULTURAL PRODUCT SUPPLY CHAINS THROUGH AN INTEGRATED PLATFORM FOR DIGITAL IDENTIFICATION, AUTHENTICATION AND TOKENIZATION**

(30) Priority: 27.05.2025 BG 645625
(71) Applicant: AGROMED Ltd, 1680 Sofia (BG)
(72) Inventor: Florov, Nikolay Vanchev, 1618 Sofia (BG)

(57) **Abstract**

The present invention falls within the fields of agrotechnologies, industrial automation, information systems, block-chain technologies, traceability of agricultural products, satellite monitoring, as well as intelligent logistics solutions and digital trading of agricultural raw materials.

The method for managing supply chains of agricultural products through an integrated platform for digital identification, digital certification, and tokenization includes the following operations: It identifies each individual batch of agricultural products by generating a unique identifier that logically links it to a dataset. In parallel or sequentially, it collects data on parameters characterizing the physical and qualitative condition of the batch. The information is associated with the respective batch identifier, after which the collected data is validated by cross-referencing with additional information. It assesses the condition of the agricultural product batches and the surrounding environment, forming a digital profile of each individual batch that contains its complete history. It creates a proof record that certifies the characteristics of the batch in an immutable digital format, generates a digital certificate, tokenizes the digital certificate, and converts the certified data into a transferable digital asset, while continuously analyzing and evaluating the condition of the agricultural products.

The integrated platform for digital identification, digital verification, and tokenization, implementing the method, consists of a multi-layer architecture comprising the following components: a batch database module for agricultural products (1), connected to a storage facilities module (2), which is connected to an integrated radio-frequency identification (RFID) module (3), connected to a microcontroller (4), which in turn is connected to an artificial intelligence data processing server (5), which receives input from a cloud environment for storage of satellite and geo-observational data (9), via a sequential connection through Application Programming Interface 1 (8) to a satellite imagery module with vegetation indices (6) and a geolocation data module (7), and has output connections to a digital batch profile database module (12) and a farmland database module (10), which is connected to a user interface (20) via a forecast and analytics module (11), while the digital batch profile database (12) is sequentially linked to a digital certificate module (13), connected to a block-chain module (14), which is connected to a token module (15), which is connected to Application Programming Interface 2 (16), which in turn connects to a grain trading internet applications module (17), connected via digital block-chain contract module (18), as a forward connection, and a digital bill of lading module (19), as a return connection, to the block-chain module (14), which is bi-directionally connected to the user interface (20), which is also bi-directionally connected to the artificial intelligence data processing server (5).

## Description

### I. FIELD OF THE INVENTION

The present invention falls within the fields of agrotechnology, industrial automation, information systems, block-chain technologies, traceability of agricultural produce, satellite observation, as well as intelligent logistics solutions and digital trade of agricultural commodities.

The invention relates to the development of an innovative method and an applied tool aimed at revolutionising the management and commercialization of grain and other agricultural products through digitalization, automation, and traceability of the processes associated with their harvesting and commercialization.

Using tokenization, the invention provides a reliable and efficient method for performing commercial, exchange, collateral, and other activities related to the ownership management, specifically facilitating the convertibility of grain.

The objective of the method is to enable digital traceability across food supply chains and to ensure the authentication of individual batches using a digital certificate which supports active monitoring and management.

### II. BACKGROUND OF THE INVENTION

In modern agriculture and grain production, the management and trade of crops are typically carried out through a combination of traditional methods and partial automation of individual processes. There are existing systems for monitoring storage conditions in silos and warehouse facilities, as well as commodity trading platforms-including those for grain-which rely on conventional contracts and physical verification of inventory.

Despite advances in technology, the full digitalization and end-to-end traceability of agricultural products within the food supply chain - from harvest to commercialization - remain largely unattained. The prior art known in this domain includes, among others, published patent applications KR20250078223 (A) dated 2025-06-02, KR102808278 (B1) dated 2025-05-15, and KR20250057361 (A) dated 2025-04-29.

The existing solutions generally fail to provide real-time control and continuous verification of the quality, quantity, and location of agricultural goods. The lack of an integrated system for active monitoring and digital certification of food resources significantly limits the potential for transparent, secure, and globally accessible trade. Moreover, there is currently an absence of standardized digital certificates for grain, which can be freely converted and utilized as commercial or financial assets or instruments of exchange on the market.

### III. TECHNICAL ESSENCE OF THE INVENTION

The objective of the present invention is to provide a method for the traceability of agricultural products throughout the entire supply chain, along with an integrated technical solution - a platform that enables complete digitalization of the processes related to identification, monitoring, and management of commercial operations. The invention aims to ensure a reliable tool for tracking agricultural products from the moment of harvest to their commercialization on the market, by utilizing a platform for data collection and analysis, sensor-based observation, and creation of a unique digital certificate that verifies the quality, quantity, and condition of agricultural goods along the entire supply chain.

An additional objective of the invention is to enable the free convertibility of the digital certificate through tokenization, thereby transforming agricultural raw products into highly liquid tradeable assets at both national and international levels.

The method constitutes an innovative, digitally managed process for monitoring, verification, and tokenized trade of agricultural products, which integrates, within a unified solution, sensor technologies, radio-frequency identification (RFID), satellite and geo-observational data, machine learning, artificial intelligence, and block-chain infrastructure. The aim is to ensure complete traceability, automation, and attribution of digital value to each agricultural batch.

At the core of the method lies the creation of a unique digital profile for each batch of agricultural products (e.g., grain, milk, fruits, etc.), containing measurable parameters of quality and storage conditions, enriched with geospatial and analytical information. This profile is validated using artificial intelligence and recorded on a block-chain ledger, where it becomes a tokenized digital asset, enabling trade, collateralization, and logistics operations.

The essence of the method lies in its capacity to transform physical agricultural batches into digitally verifiable and exchangeable units, offering a high degree of transparency, trustworthiness, and integration into modern electronic platforms. In doing so, the method enables the full digitalization and optimization of the entire supply chain - from harvest to market realization and credit facilitation.

The method constitutes a sequential system of operations for collecting, structuring, validating, and utilizing data related to the origin, condition, movement, and commercial execution of agricultural products throughout their supply chain - from initial harvest to final trade transaction.

In its initial phase, the method provides for the identification of each batch of agricultural products by generating a unique identifier that logically associates the batch with a dataset containing information on origin, producer, harvest date, crop type, geographic location, and other essential attributes.

In parallel or sequentially, data is collected on parameters characterizing the physical and qualitative condition of the batch, as well as the conditions under which it is stored or processed. These data may be entered automatically via measuring devices or manually, depending on the context and available infrastructure. The collected information is associated with the corresponding batch identifier.

The method provides for the validation of the collected data through comparison with additional information related to the agro-ecological environment of origin, including geolocation indicators, climatic and satellite indices, and other external sources of agricultural observation. Based on this correlation, an assessment regarding the condition of the agricultural products and the environmental context from which they originate is carried out by analyzing dependencies among the parameters.

Based on the validated data, a digital profile of the batch is generated, containing its complete history - from the moment of identification to its current status - including changes in qualitative and quantitative indicators during storage, processing, and movement.

The method includes the creation of an evidentiary record that certifies the characteristics of the batch in an immutable digital format, ensuring authenticity, traceability, and protection against unauthorized alteration. This record serves as the basis for the digital representation of the batch in the form of a digital asset, enabling its participation in commercial, logistical, and financial processes.

The method further provides the possibility for commercial realization through the conversion of the verified data into a transferable digital token, which can be transferred, pledged, accounted for, or used as collateral. The method also supports automated execution of commercial transactions, including the registration of ownership transfer and the cancellation of the validating record upon fulfilment of the transaction conditions.

Additionally, the method allows for continuous analysis and evaluation of the condition of agricultural products through the use of predictive models, anomaly detection, and the generation of recommendations based on accumulated historical and contextual data.

By implementing this method, a high level of trust, traceability, and operational transparency is ensured in the management of agricultural product batches throughout the entire supply chain - from harvest to final economic realization.

The method is implemented through an integrated platform for digital identification, authentication, and tokenization, which executes the method via a multilayered technological architecture. At its core, the platform comprises a system of interconnected modules and databases that collectively support the continuous processing, validation, and transformation of information related to agricultural product batches. The system includes the following components:
A product batch database module, which is connected to a storage facilities module containing a storage unit database and intelligent sensors, linked to an integrated radio-frequency identification (RFID) module, comprising a database of radio-frequency identification batch identifiers and a radio-frequency identification reader, sequentially connected to a microcontroller. The microcontroller is connected to a server for data processing through an artificial intelligence (AI), which receives input data from a cloud environment for storing satellite and geo-observational data via a sequential linked Application Integration Interface 1 to a vegetation index satellite imagery module and a geolocation data module. The data processing server also provides output to a digital batch profile database module and to an agricultural land database module, which is connected to the user interface through a forecast and analysis module. This module comprises a yield forecast database, an intervention recommendations database, and a database for other analytical data and predictions. The digital batch profile database is sequentially connected to a digital certificate, which is linked to a block-chain module, connected to a token module, which in turn is connected via Application Integration Interface 2 to a digital trading application module. This module interacts with a digital block-chain contract module (direct link) and a digital bill of lading module (reverse link), both of which interface with the block-chain module. The block-chain module is bi-directionally connected to the user interface, which is also bi-directionally connected to the data processing server, and has reverse communication with the forecast and analysis module.

### Advantages of the Method:

The method for managing agricultural supply chains through digital identification, digital verification, and tokenization provides substantial technical and organizational advantages over the background of the invention, including but not limited to:

### Complete Traceability and Transparency within the Supply Chain

The method enables continuous digital traceability of each batch of agricultural products from the point of origin to the moment of commercial realization or logistical transaction. Every stage of product movement is documented, identified, and verifiable.

### Reliable Digital Identification and Protection Against Tampering

By combining sensor-acquired and manually collected data, including geolocation, timestamp, and production parameters, into a cryptographic hash, the method generates a unique and immutable digital fingerprint. This ensures the integrity and authenticity of the data, eliminating the risk of counterfeiting or batch duplication.

### Automated Digital Verification with Legal and Commercial Value

The generated certificate, digitally signed and recorded on a block-chain ledger, may serve as verifiable proof of origin, quality, and compliance. This certificate is accessible to counterparties, regulatory authorities, and financial institutions for inspection and validation purposes.

### Transformation of Physical Goods into Digital Assets through Tokenization

The method enables the creation of tokens representing specific batches of agricultural products. These tokens may be traded, used as collateral, pledged, or fractionally divided, thereby facilitating liquidity, divisibility, and seamless integration into electronic commerce platforms.

### Automation and Operational Efficiency through Smart Contracts

Through tokenization and block-chain-based mechanisms, the management of contractual relationships - including delivery, payment, ownership transfer, and revocation of rights - is automated without the need for manual intervention or third-party intermediaries.

### Data Security and Record Immutability

The application of block-chain technology and cryptographic hashing ensures tamper-resistance and protection against unauthorized interference throughout the process, including fraud prevention in agricultural commodity trading.

### Interoperability with External Platforms and Institutions

The method is compatible with electronic exchanges, logistics systems, registries, and banking platforms, enabling seamless integration with existing operational workflows and enhancing the administration of agricultural commodity flows.

### Enhanced Risk Management and Decision-Making

Through analytical processing and predictive analysis, the method enables the assessment of product quality, yield forecasting, detection of risk deviations, and supports timely responses by stakeholders across the supply chain.

### Increased Trust and Creditworthiness

The standardized form of verification, combined with the ability to present tokenized assets to financial institutions, improves access to financing and reduces transaction and credit costs.

### Applicability in Both National and Cross-Border Contexts

The method supports the management and commercialization of agricultural products at local, national, and international levels, while ensuring high standards of traceability, security, and transparency. It is aligned with the objectives of sustainable trade and food policy frameworks.

### IV. BRIEF DESCRIPTION OF THE FIGURES

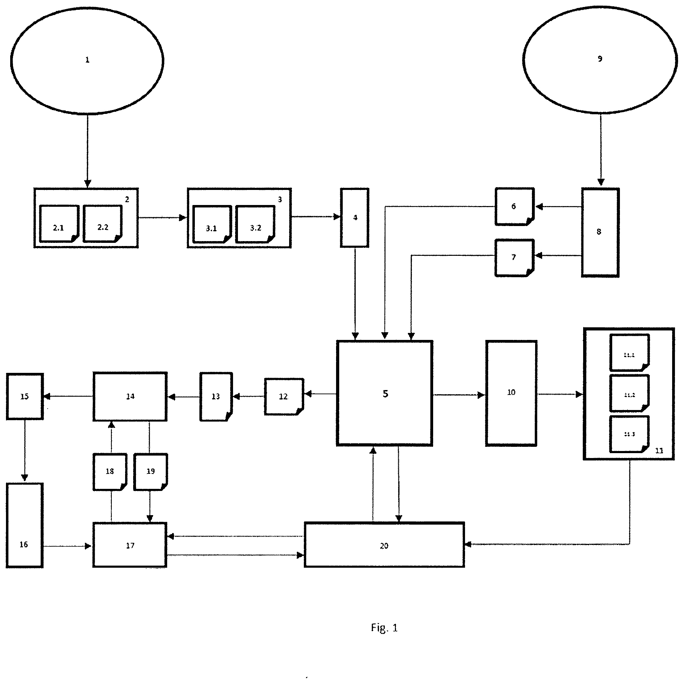

Fig. 1 - Graphical Representation of the Integrated Hardware-Software Platform

### V. EXAMPLES OF IMPLEMENTATION OF THE INVENTION

The proposed implementation of the method applies to the management of supply chains for various categories of agricultural products - including grain, milk, fruits, vegetables, egg products, and other primary commodities. The method employs an integrated hardware-software platform based on IoT, sensor data, geospatial analysis, block-chain technology, and artificial intelligence. Its purpose is to generate a unique digital profile for each product batch, subsequently verify its characteristics, and enable tokenization for electronic commerce and logistics.

### Example #1

The method for managing agricultural supply chains through an integrated platform for digital identification, digital verification, and tokenization comprises the following operations:
Each individual batch of agricultural products is identified through the generation of a unique identifier, which is logically linked to a dataset containing information such as origin, producer, harvest date, crop type, and geographical location. In parallel or sequence, the method performs data collection on parameters characterizing the physical and qualitative condition of the batch, as well as the conditions under which it is stored or processed. This information is associated with the corresponding batch identifier. The collected data is then validated by comparison with additional information related to the agro-ecological environment of origin - including geolocation indicators, climatic and satellite indices, or other external sources of agricultural observation. The method performs an assessment of the condition of the agricultural product and its environmental context by analyzing dependencies between the parameters and generates a digital profile of the batch that contains its complete lifecycle history. An evidentiary record is created to verify the characteristics of the batch in an immutable digital format, by generating a digital certificate, tokenizing the certificate, and transforming the verified data into a transferable digital asset. The method further conducts continuous analysis and evaluation of the condition of agricultural products through the use of predictive models, anomaly detection, and recommendation generation based on accumulated historical and contextual data.

The method is implemented via an integrated platform for digital identification, digital verification, and tokenization.

Each new batch of agricultural products, for example grain (1), is introduced into a grain storage facility (2), such as a silo or warehouse (2.1), equipped with embedded intelligent sensors (2.2) that perform real-time measurement of physical and quality parameters of the grain - including temperature, humidity, weight, dust levels, and others - as well as environmental parameters within the storage facility. Upon entry of the grain batch (1) into any of the grain storage facilities in the data base (2.1), a radio-frequency identifier (3.1), logically linked to the information for the corresponding batch, is automatically generated as part of the radio-frequency identification (RFID) module (3) and contains a unique code into which a basic dataset is recorded - such as origin, crop type, producer, harvest date, physical parameters, and volume. The recorded data is read by a radio-frequency identifier reader (3.2) and transmitted to a microcontroller (4), where it is processed and encoded. The data is then transmitted via secure communication protocols (e.g., NB-IoT, LoRaWAN, LTE, Wi-Fi, or Ethernet) to a central server for artificial intelligence-based data processing (5). Data transmission is conducted over encrypted channels (e.g., TLS, VPN) to ensure the security and integrity of the information.

Satellite imagery containing vegetation indices (6) and geolocation data (7) of the specific agricultural fields from which the corresponding grain batch originates are also transmitted to the artificial intelligence data processing server (5). This transfer is carried out via an Application Programming Interface (8) connected to a cloud-based storage environment for satellite and geo-observational data (9), such as Copernicus or Sentinel-2.

Using the combined sensor data, identification data, and satellite imagery, the system performs analysis through big data processing and artificial intelligence algorithms to determine the current physiological status of the crops, evaluate vegetative activity, and detect occurrences of drought, disease, or nutrient deficiencies. The analysis results are linked to the geolocation data of the agricultural fields and stored in a database (10). Upon user request, forecasts and analytical insights (11) can be retrieved, such as grain yield forecasts (11.1), recommendations for agronomic interventions (11.2), or other analytical and predictive outputs (11.3), whose information can be utilized by commercial counterparties, financial and credit institutions, as well as by the farmers themselves.

The identification, sensor, and geolocation data received by the artificial intelligence data processing server (5) are associated with a specific grain batch (1), resulting in the creation of an individual digital profile (12). This profile contains the complete history of all measured parameters and the origin of the product. Following the validation of the data, a digital certificate (13) is automatically generated within a block-chain module (14), certifying the qualitative and quantitative characteristics of the batch. This certificate is then converted into a token (15), which may be used as a digital asset in electronic commerce via an Application Programming Interface (16) that connects the system to online grain trading platforms (17), including commodity exchanges and e-commerce systems.

The conclusion and execution of transactions are carried out through automated block-chain contracts (18), which, upon completion, trigger the generation of a digital bill of lading (19). This bill of lading is transmitted back to the block-chain module (14), where it leads to the cancellation of the previously issued certificate (13).

The integrated platform for digital identification, digital certification, and tokenization of grain batches is managed via a user interface (20), through which the user can monitor, validate, and manage the batches, request analyses, and initiate commercial transactions via a bidirectional connection with the artificial intelligence data processing server (5) and a bidirectional connection with internet-based grain trading applications (17). Simultaneously, the user can receive personalized reports, charts, and recommendations based on intelligent analysis and the current agro-ecological conditions. This functionality facilitates timely decision-making for grain management, preparation for commercialization, and resource optimization.

### VI. APPLICATION OF THE INVENTION

The invention finds application in the agricultural sector, logistics, trade of agricultural raw materials - especially on international markets - as well as in financial, collateral, and insurance activities related to risk management in agricultural production. The method is particularly applicable for the digitization of supply chains for agricultural products such as grain, milk, fruits, vegetables, and other primary or processed agricultural goods, where reliable traceability, verification, and secure commercial realization are required.

By implementation and integration at points of product reception, storage facilities, processing units, laboratory analysis, trading platforms, credit institutions, insurance companies, and intermediaries, the invention provides a technological basis for:
- digital transformation of supply chains;
- real-time quality monitoring and control;
- automated creation of certification records and tokens;
- management of commodity stocks and assets via digital contracts;
- facilitation of certification, insurance, and financing of agricultural batches.

The invention can be deployed both in individual farms and cooperatives, as well as in trading companies, electronic trading platforms, silo and port operators, and governmental or international control institutions or certification bodies that certify origin, quality, and movement of agricultural products.

## Claims

1. A method for managing agricultural supply chains through an integrated platform for digital identification, digital verification, and tokenization, **characterized in that** it comprises the following operations: Identifying each individual batch of agricultural products by generating a unique identifier that logically links it to a data set including information such as origin, producer, harvest date, crop type, and geographic location; performing, either in parallel or sequentially, the collection of data on parameters characterizing the physical and qualitative state of the batch, as well as the conditions under which it is stored or processed, associating this information with the corresponding batch identifier; validating the collected data by comparing it with additional information related to the agro-ecological environment of origin, including geolocation data, climatic and satellite indices, or other external sources of agricultural monitoring; assessing the condition of the agricultural product and its environment through analysis of interdependencies between parameters; generating a digital profile of the batch containing its complete history; creating an evidential record certifying the batch's characteristics in an immutable digital format, by issuing a digital certificate; tokenizing the digital certificate and converting the certified data into a tradable digital asset; performing continuous analysis and assessment of the state of the agricultural products through the use of predictive models, anomaly detection, and generation of recommendations based on accumulated historical and contextual data.

2. An integrated platform for digital identification, digital verification, and tokenization, implementing the method, **characterized by** a multilayer architecture comprising the following elements: A batch database module for agricultural products (1), connected to a storage facilities module (2), which includes a storage objects database (2.1) and smart sensors (2.2), connected to an integrated radio-frequency identification module (3), consisting of a batch radio-frequency identification tag database (3.1) and an radio-frequency identification reader (3.2), and connected to a microcontroller (4), which is connected to an AI-based data processing server (5), which has incoming connections from a cloud environment (9) for the storage of satellite and geo-observation data, through an Application Programming Interface 1 (8), sequentially connected to a satellite imagery module with vegetation indices (6) and a geolocation data module (7), and has outgoing connections to a digital batch profile database module (12) and to an agricultural land database module (10), which is connected to a user interface (20) through a forecast and analysis module (11), comprising of an yield forecast database (11.1) and a recommendations for an intervention database (11.2) and a database for other analytical data and forecasts (11.3), while the digital batch profile database (12) is sequentially connected to a digital certificate (13), which is connected to a block-chain module (14), further connected to a token (15), connected to Application Programming Interface 2 (16), linked to an e-commerce internet applications module (17), which is connected via a direct link to a digital block-chain contract module (18) and via a reverse link to a digital bill of lading module (19), both connected to the block-chain module (14), which is bi-directionally linked to the user interface (20) and also bi-directionally linked to the AI data processing server (5).
